(19) Europäisches Patentamt
European Patent Office
Office européen des brevets

(11) **EP 1 738 517 B1**

(12) **FASCICULE DE BREVET EUROPEEN**

(45) Date de publication et mention
de la délivrance du brevet:
**10.03.2010 Bulletin 2010/10**

(21) Numéro de dépôt: **05717482.3**

(22) Date de dépôt: **24.01.2005**

(51) Int Cl.:
***H04L 9/32*** (2006.01)

(86) Numéro de dépôt international:
**PCT/FR2005/000158**

(87) Numéro de publication internationale:
**WO 2005/081452 (01.09.2005 Gazette 2005/35)**

(54) **PROCEDES ET DISPOSITIFS CRYPTOGRAPHIQUES SANS TRANSFERT DE CONNAISSANCE**

NULLWISSEN-SICHERE KRYPTOGRAFIEVERFAHREN UND -EINRICHTUNGEN

ZERO-KNOWLEDGE PROOF CRYPTOGRAPHY METHODS AND DEVICES

(84) Etats contractants désignés:
**AT BE BG CH CY CZ DE DK EE ES FI FR GB GR
HU IE IS IT LI LT LU MC NL PL PT RO SE SI SK TR**

(30) Priorité: **23.01.2004 FR 0450129**

(43) Date de publication de la demande:
**03.01.2007 Bulletin 2007/01**

(73) Titulaire: **Phentam Dire NV, LLC
Dover, DE 19904 (US)**

(72) Inventeurs:
• **GUILLOU, Louis
F-35230 Bourgbarre (FR)**
• **QUISQUATER, Jean-Jacques
B-1640 Rhode Saint-Genèse (BE)**

(74) Mandataire: **Dendorfer, Claus
Dendorfer & Herrmann
Patentanwälte Partnerschaft
Bayerstrasse 3
80335 München (DE)**

(56) Documents cités:
**WO-A-00/45550 WO-A-02/073876**

• **GUILLOU L C ET AL: "Cryptographic
authentication protocols for smart cards"
COMPUTER NETWORKS, ELSEVIER SCIENCE
PUBLISHERS B.V., AMSTERDAM, NL, vol. 36, no.
4, 16 juillet 2001 (2001-07-16), pages 437-451,
XP004304908 ISSN: 1389-1286**

**Description**

La présente invention concerne la cryptographie à clés asymétriques (également appelée "cryptographie à clé publique"). Plus précisément, elle concerne un procédé et un système servant à vérifier l'authenticité d'une entité connue ou d'un message provenant d'une entité connue, ou encore à signer un message.

On rappelle que les systèmes de cryptographie à clés asymétriques comprennent des détenteurs de paires de clés, chaque paire comprenant une clé dite "publique" et une clé dite "privée" (chaque clé pouvant d'ailleurs comporter plusieurs paramètres). Chaque clé publique est liée à l'identité de son détenteur par une autorité de certification. Les systèmes de cryptographie à clés asymétriques comprennent également des entités appelées "contrôleurs", qui ont enregistré un certain nombre de clés publiques conjointement avec les identités certifiées de leurs détenteurs.

Depuis l'invention du procédé cryptographique à clés asymétriques dit "RSA" (initiales des inventeurs R. Rivest, A. Shamir et L. Adleman, cf. l'article de M. Gardner intitulé "A new kind of cipher that would take millions of years to break", Scientific American, août 1977), le problème de la factorisation des nombres entiers a fait l'objet d'intenses recherches. Malgré de notables progrès (résultant d'ailleurs davantage de l'évolution de la puissance des ordinateurs que de celle des algorithmes de factorisation), on ne connaît toujours pas de méthode permettant de factoriser un grand nombre entier en un temps raisonnable. C'est donc à juste titre que les utilisateurs font confiance au procédé RSA.

Chaque mise en oeuvre du procédé RSA est associée à un entier appelé "module", noté n, qui est le produit de deux grands facteurs premiers distincts $p_1$ et $p_2$. Compte tenu des capacités de calcul actuelles, il est conseillé d'utiliser des modules de 1024 bits (de l'ordre de $10^{308}$) au moins. Une clé publique RSA comprend le module $n$, et un "exposant" e qui est premier avec ($p_2$ -1) et avec ($p_2$ -1). La clé privée RSA correspondante comprend un "exposant" $d$ tel que :

$$e \times d = 1 \quad \mathrm{mod}\big[(p_1 - 1)(p_2 - 1)\big]$$

(le symbole "mod" signifie "modulo"). La sécurité de ce procédé repose sur le fait qu'il est impossible en un temps raisonnable de calculer $d$ à partir de $n$ et e si l'on ne connaît pas les facteurs $p_1$ et $p_2$. Comme expliqué ci-dessus, il n'est pas possible de calculer ces facteurs (qui sont naturellement tenus secrets) en un temps raisonnable.

La procédure cryptographique dite "d'authentification d'entités" met en présence un contrôleur et un détenteur de clés, appelé ici "démonstrateur", qui souhaite être authentifié par le contrôleur afin de recevoir une certaine autorisation, par exemple un droit d'accès à des ressources informatiques. Le démonstrateur déclare son identité au contrôleur et doit lui prouver qu'il détient bien la clé privée correspondant à la clé publique liée à cette identité.

Il est possible de réaliser cette authentification sans que le démonstrateur ne divulgue la moindre information sur sa clé privée au contrôleur: on parle alors d'authentification "sans transfert de connaissance" (en anglais, *"zero-knowledge proof"*). Cette technique a été décrite dans sa généralité par S. Goldwasser, S. Micali et C. Rackoff dans leur communication au "17th ACM Symposium on the Theory of Computing" intitulée "The Knowledge Complexity of Interactive Proof Systems" (Actes pages 291 à 304, 1985).

Dans l'article intitulé "Zero-knowledge Proofs of Identity" (Journal of Cryptology, vol. 1, pages 77 à 94, 1988), U. Feige, A. Fiat et A. Shamir ont proposé un procédé cryptographique "sans transfert de connaissance", dans lequel le démonstrateur, d'une part, détient une clé privée Q, et d'autre part a publié un module RSA $n$ ainsi qu'une clé publique $G = Q^2$ moud $n$ (le calcul de $Q$ à partir de $G$, c'est-à-dire le calcul d'une racine carrée modulo $n$, est impossible en un temps raisonnable à moins que l'on ne connaisse les facteurs premiers de $n$).

En ce qui concerne l'application de ce procédé à l'authentification d'entités, la procédure dite de "Fiat-Shamir" comprend les étapes interactives suivantes:

    *1. Etape d'engagement:* le démonstrateur choisit aléatoirement un entier r, calcule "l'engagement" $R = r^2$ mod $n$, et envoie l'engagement au contrôleur;

    *2. Etape de défi:* le contrôleur choisit aléatoirement un entier $d$ appelé "défi", qui peut prendre la valeur 0 ou la valeur 1, et envoie ce défi au démonstrateur;

    *3. Etape de réponse:* le démonstrateur calcule la "réponse" $D = r \times Q^d$ mod $n$, et envoie cette réponse au contrôleur; et

    *4. Etape de vérification:* le contrôleur calcule $\left(\dfrac{D^2}{G^d}\right) \mathrm{mod}\, n$ , et vérifie que le résultat est bien égal à l'engagement R.

Il est de plus conseillé, pour une plus grande sécurité, de répéter toute cette procédure "en série" un nombre de fois aussi grand que possible (en faisant varier *r* et *d* à chaque fois) avant de considérer que l'authentification a bien été effectuée.

Il s'agit bien d'une procédure "sans transfert de connaissance", car un observateur ne peut, à partir des données échangées, calculer la clé privée *Q* du démonstrateur.

Selon une variante, dite de "Feige-Fiat-Shamir" ou "en parallèle", le démonstrateur détient un nombre *m*>1 de clés privées $Q_1, Q_2, ..., Q_m$, et a publié, outre un module RSA *n*, une pluralité de clés publiques respectives $G_1, G_2, ..., G_m$, où $G_i = Q_i^2 \bmod n$ pour *i* = 1,...,*m*. On met alors en oeuvre les étapes suivantes:

> 1. *Etape d'engagement:* le démonstrateur choisit aléatoirement un entier *r,* calcule "l'engagement" *R* = $r^2$ mod *n,* et envoie l'engagement au contrôleur;

> 2. *Etape de défi:* le contrôleur choisit aléatoirement *m* défis $d_1, d_2, ..., d_m$, où $d_i$ est égal à 0 ou 1 pour i=1,...,*m*, et envoie ces défis au démonstrateur;

> 3. *Etape de réponse:* le démonstrateur calcule la réponse

$$D = r \times Q_1^{d_1} \times Q_2^{d_2} \times ... \times Q_m^{d_m} \bmod n \ ,$$

> et envoie cette réponse au contrôleur; et

> 4. *Etape de vérification:* le contrôleur calcule $\left( \dfrac{D^2}{G_1^{d_1} \times G_2^{d_2} \times ... \times G_m^{d_m}} \right) \bmod n$ , et vérifie que le résultat est bien égal à l'engagement R.

Cette variante "en parallèle" permet d'accélérer la procédure d'authentification de Fiat-Shamir par rapport à la variante "en série" mentionnée ci-dessus.

On notera d'ailleurs que les calculs requis pour mettre en oeuvre l'une ou l'autre de ces variantes peuvent être réduits si le démonstrateur utilise le "théorème des restes chinois" (bien connu des experts en théorie des nombres). Il peut opérer de la manière suivante.

Considérons tout d'abord le calcul de l'engagement *R*. Pour un module $n = p_1 \times p_2$, où $p_1 < p_2$, soit *C* le nombre positif inférieur à $p_1$ tel que $p_1$ divise ($p_2 \times C$-1) (ce nombre *C* est connu sous le nom de "reste chinois"). Le démonstrateur choisit aléatoirement *deux* entiers $r_1$ et $r_2$ tels que $0 < r_1 < p_1$ et $0 < r_2 < p_2$, et calcule les deux "composantes d'engagement" $R_1 = r_1^2 \bmod p_1$ et $R_2 = r_2^2 \bmod p_2$. La valeur de l'engagement s'en déduit selon:

$$R = z \times p_2 + R_2 \ , \ \ \text{où} \ \ z = C \times (R_1 - R_2) \ .$$

Ensuite, concernant le calcul de la réponse *D*, le démonstrateur peut opérer de la manière suivante. Définissons, pour *i*=1,...,*m*, des "composantes de clés privées" $Q_{i,1} = Q_i \bmod p_1$ et $Q_{i,2} = Q_i \bmod p_2$. Le démonstrateur calcule d'abord les deux "composantes de réponse"

$$D_1 = r_1 \times Q_{1,1}^{d_1} \times Q_{2,1}^{d_2} \times ... \times Q_{m,1}^{d_m} \bmod p_1 \ ,$$

et

$$D_2 = r_2 \times Q_{1,2}^{d_1} \times Q_{2,2}^{d_2} \times ... \times Q_{m,2}^{d_m} \bmod p_2 \ .$$

Il obtient ensuite la valeur de la réponse selon:

$$D = z \times p_2 + D_2 \ , \quad \text{où} \quad z = C \times (D_1 - D_2) \ .$$

L'avantage de cette méthode de calcul "à la chinoise" est que le démonstrateur calcule modulo $p_1$ et modulo $p_2$ au lieu de modulo $n$, dans des conditions où les nombres $p_1$ et $p_2$ sont généralement beaucoup plus petits que $n$.

La procédure d'authentification d'entités de Fiat-Shamir peut être aisément transposée à la vérification par un contrôleur qu'un message $M$ qu'il a reçu lui a bien été envoyé par un certain détenteur de clés, appelé ici aussi "démonstrateur". Cette procédure d'authentification de messages comprend les étapes interactives suivantes:

1. *Etape d'engagement:* le démonstrateur choisit aléatoirement un entier $r$, et calcule d'abord l'engagement $R = r^2$ mod $n$, puis le "titre" (également appelé le "jeton") $T = h(M, R)$, où h est une fonction de hachage (par exemple l'une des fonctions définies dans la norme ISO/IEC 10118-3), et enfin envoie ce titre $T$ au contrôleur;

2. *Etape de défi:* le contrôleur choisit aléatoirement un défi $d$, qui peut prendre la valeur 0 ou la valeur 1, et envoie ce défi au démonstrateur;

3. *Etape de réponse*: le démonstrateur calcule la réponse $D = r \times Q^d$ mod $n$, et envoie cette réponse au contrôleur; et

4. *Etape de vérification:* le contrôleur calcule $h\left( M, \left( \dfrac{D^2}{G^d} \right) \bmod n \right)$, , et vérifie que le résultat est bien égal au titre $T$.

On peut enfin transposer la procédure d'authentification d'entités de Fiat-Shamir de manière à définir une procédure de signature d'un message M qui est envoyé à un contrôleur par un certain détenteur de clés, appelé ici "signataire"; on notera qu'une procédure de signature n'est, quant à elle, pas interactive. Le signataire détient une pluralité de clés privées $Q_1, Q_2, ..., Q_m$, où $m$ est grand par rapport à 1, et a publié, outre un module RSA $n$, des clés publiques respectives $G_1, G_2, ..., G_m$, où $Gi = Q_i^2$ mod $n$ pour $i = 1, ..., m$. Cette procédure de signature comprend les étapes suivantes (auxquelles on a donné respectivement les mêmes noms que ci-dessus par analogie):

1. *Etape d'engagement:* le signataire choisit aléatoirement $m$ entiers $r_i$, où $i = 1, ..., m$, et calcule d'abord les engagements $R_1 = r_i^2$ mod $n$, puis le titre $T = h(M, R_1, R_2, ..., R_m)$, où $h$ est une fonction de hachage produisant un mot de $m$ bits, et enfin envoie ce titre $T$ au contrôleur;

2. *Etape de défi:* le signataire identifie lui-même les bits $d_1, d_2, ..., d_m$ du titre $T$ ;

3. *Etape de réponse:* le signataire calcule les "réponses" $D_i = r_i \times Q_i^{d_i} \bmod n$, et envoie ces réponses au contrôleur; et

4. *Etape de vérification:* le contrôleur calcule

$$h\left( M, \left( \dfrac{D_1^2}{G_1^{d_1}} \right) \bmod n, \left( \dfrac{D_2^2}{G_2^{d_2}} \right) \bmod n, ..., \left( \dfrac{D_m^2}{G_m^{d_m}} \right) \bmod n \right) ,$$

et vérifie que le résultat est bien égal au titre T.

Examinons à présent de plus près la question de la sécurité du procédé de Fiat-Shamir. Par exemple, concernant la procédure d'authentification d'entité succinctement exposée ci-dessus, est-il possible pour un imposteur (c'est-à-dire une entité connaissant le module RSA $n$ et la clé publique $G$, mais ne connaissant pas la clé privée $Q$ de l'entité qu'elle prétend être) de tromper le contrôleur?

On notera tout d'abord que le défi, bien qu'aléatoire, ne peut prendre que deux valeurs; si un imposteur devine correctement (avec, donc, 50% de chances de succès) la valeur du défi qui lui sera, au cours de la procédure d'authentification, jeté par le contrôleur, pourra-t-il satisfaire à toutes les étapes du procédé de Fiat-Shamir sans se faire "prendre" par le contrôleur? La réponse à cette question est oui. En effet:

- si l'imposteur devine que le défi sera $d = 0$, alors il fournit au contrôleur un engagement $R = r^2 \bmod n$, et une réponse $D = r$ ; et

- si l'imposteur devine que le défi sera $d = 1$, alors il choisit un entier $I > 0$ quelconque, et fournit au contrôleur un engagement $R = I^2 \times G \bmod n$, et une réponse $D = I \times G \bmod n$.

La procédure de Fiat-Shamir présente donc une faiblesse, dont l'effet peut toutefois être atténué, comme indiqué ci-dessus, si l'on répète cette procédure en série, de manière à rendre aussi peu probable que possible une série correcte d'anticipations du défi par un imposteur éventuel. Il en résulte que, pour rendre cette procédure d'authentification suffisamment sûre, on doit en augmenter considérablement la durée.

La demande internationale WO-00/45550 divulgue un procédé de cryptographie (applicable à une procédure d'authentification d'entité, à une procédure d'authentification de message et à une procédure de signature de message) ne souffrant pas de cet inconvénient. Selon ce procédé, le démonstrateur publie non seulement un module RSA $n$ et une clé publique $G$, mais également un entier (appelé "l'exposant") $v = 2^k$, où $k$ (appelé "paramètre de sécurité") est un entier supérieur à 1. De plus,

$$G = Q^v \bmod n \ ,\tag{1}$$

où $Q$ est la clé privée du démonstrateur.

La procédure d'authentification selon la demande WO-00/45550 comprend les étapes suivantes:

1. *Etape d'engagement:* le démonstrateur choisit aléatoirement un entier $r$, calcule "l'engagement" $R = r^v \bmod n$, et envoie l'engagement au contrôleur;

2. *Etape de défi:* le contrôleur choisit aléatoirement un entier $d$ appelé "défi", où $0 \leq d \leq 2^{k-1}-1$, et envoie ce défi au démonstrateur;

3. *Etape de réponse:* le démonstrateur calcule la "réponse" $D = r \times Q^d \bmod n$, et envoie cette réponse au contrôleur; et

4. *Etape de vérification:* le contrôleur calcule $\left(\dfrac{D^v}{G^d}\right) \bmod n$ , et vérifie que le résultat est bien égal à l'engagement R.

On voit donc que dans cette procédure le défi peut prendre $2^{k-1}$ valeurs différentes (au lieu de 2 valeurs seulement selon le procédé de Fiat-Shamir), ce qui rend une anticipation correcte du défi par un imposteur d'autant plus improbable que l'on choisit $k$ grand, et cela pour une seule mise en oeuvre de la succession d'étapes ci-dessus.

Cela étant, on peut bien sûr répéter cette procédure s fois en série et/ou utiliser $m$ couples de clés en parallèle, comme expliqué ci-dessus, afin de renforcer la sécurité; il est alors avantageux de calculer "à la chinoise". En pratique, il est conseillé de prendre, pour le produit $[(k\text{-}1)\times m\times s]$, une valeur au moins égale à 40 en authentification et à 80 en signature (compte tenu de ce qu'un attaquant dispose de plus de temps pour "craquer" le code en signature qu'en authentification).

De plus, selon la demande WO-00/45550, on requiert que la clé publique vérifie la relation

$$G = g^2 \bmod n \ ,\tag{2}$$

où $g$ est un petit entier supérieur à 1 (appelé "nombre de base"). On voit en effet, en combinant les équations (1) et (2) ci-dessus, qu'il faut trouver un couple $(g, Q)$ satisfaisant à l'équation

$$Q^v = g^2 \bmod n \ ,\tag{3}$$

pour $n$ et $\nu$ donnés; or on peut démontrer que la solution de cette équation (3) n'est possible (en un temps raisonnable) que pour quelqu'un qui connaît la factorisation du module, c'est-à-dire pour le détenteur des clés. Autrement dit, il est aussi complexe de calculer une paire de clés conforme à la demande WO-00/45550 à partir des paramètres publics correspondants, que de factoriser ce nombre $n$; on dit que les deux tâches sont "équivalentes" en termes de complexité, et qu'un jeu de clés impliquant une telle équivalence satisfait au "critère d'équivalence".

Un premier avantage de cet état de choses est que l'on dispose ainsi d'un niveau de sécurité de référence (à savoir le problème de la factorisation). Un second avantage est qu'il n'est pas nécessaire, pour un détenteur de clés selon la demande WO-00/45550, de faire certifier sa clé publique par une autorité de certification, c'est-à-dire d'obtenir de cette autorité un certificat liant cette clé publique à l'identité de son détenteur; il est seulement nécessaire de faire certifier le module RSA $n$, les autres paramètres étant directement publiés par le détenteur lui-même. En revanche, dans le procédé de Fiat-Shamir par exemple, il est possible pour différentes entités de construire leur propre paire de clés à partir d'un même module RSA (les paires de Fiat-Shamir ne satisfont donc pas au critère d'équivalence défini ci-dessus), et par conséquent chaque clé publique particulière doit être liée par une autorité de certification à l'identité de son détenteur.

Toutefois, on peut montrer qu'il n'existe de solutions à l'équation (3) que pour certains modules $n$ particuliers (représentant environ un quart de tous les modules RSA). Or cela est gênant pour une entité souhaitant produire des paires de clés selon la demande WO-00/45550: si cette entité possède déjà une collection de modules RSA, elle ne pourra généralement utiliser qu'une partie d'entre eux pour construire ces clés, et si elle ne possède pas déjà de modules RSA, elle aura plus de mal à trouver des modules adéquats que si tous (ou presque tous) les modules RSA étaient compatibles avec le procédé.

La présente invention concerne donc, selon un premier aspect, un procédé de cryptographie à clés asymétriques mettant en jeu un détenteur de clés possédant un nombre $m \geq 1$ de clés privées $Q_1, Q_2,..., Q_m$ et de clés publiques respectives $G_1, G_2,..., G_m$, chaque paire de clés $(Q_i, G_i)$ (où $i = 1,..., m$) vérifiant soit la relation $G_i = Q^{\nu}_i \bmod n$, soit la relation

$$G_i \times Q_i^{\nu} = 1 \bmod n \,,$$ où $n$ est un entier public égal au produit de $f$ facteurs premiers privés (où $f > 1$), notés $p_1,...,$ $p_f$, dont deux au moins sont distincts, et l'exposant $\nu$ est un entier public égal à une puissance de 2. Ce procédé est remarquable en ce que

$$\nu = 2^{b+k} \,,$$

où $k$ est un entier strictement positif et $b = \max(b_1,..., b_f)$, où $b_j$ (où $j = 1,..., f$) est le plus grand entier tel que $(p_j - 1) / 2^{b_j - 1}$ soit pair,
et en ce que chaque clé publique $G_i$ (où $i = 1,..., m$) est de la forme

$$G_i = g_i^{2^{a_i}} \bmod n \,,$$

où les nombres $g_i$, appelés "nombres de base", sont des entiers strictement supérieurs à 1, et où les nombres $a_i$ sont des entiers tels que $1 \leq \alpha_i \leq b$ et tels que l'un d'entre eux au moins est strictement supérieur à 1.

On notera que la présente invention se distingue de la demande WO-00/45550 en particulier en ce que chaque clé publique est ici de la forme $G_i = g_i^{2^{a_i}}$ où l'un au moins des nombres $\alpha_i$ est strictement supérieur à 1, au lieu de

$$G_i = g_i^{2} \bmod n \,.$$

On montrera dans la description détaillée ci-dessous que, grâce à ces dispositions, il existe nécessairement des clés selon l'invention, c'est-à-dire des couples $(g, Q)$ satisfaisant aux conditions succinctement exposées ci-dessus, et ce, quelle que soit la valeur choisie pour le module $n$, à de très rares exceptions près (ces modules particuliers n'étant en pratique jamais choisis pour mettre en oeuvre le procédé RSA). Autrement dit, n'importe quel module RSA est compatible avec le procédé selon la présente invention.

Selon des caractéristiques particulières, l'un au moins desdits facteurs premiers $p_1,...,p_f$ est congru à 1 modulo 4, et les entiers $\alpha_i$ (où $i = 1,..., m$) sont tous égaux audit nombre $b$.

Grâce à ces dispositions, la construction de jeux de clés selon l'invention est considérablement facilitée.

Selon d'autres caractéristiques particulières, il existe au moins un nombre $g_s$, parmi lesdits nombres de base $g_1,..., g_m$, et deux nombres $p_t$ et $p_u$ différents de 2 parmi lesdits facteurs premiers $p_1,...,p_f$, tels que, compte tenu desdits

nombres $b_1,...,b_f$,

- si $b_t = b_u$, alors $(g_s \mid p_t) = - (g_s \mid p_u)$, et

- si $b_t < b_u$, alors $(g_s \mid p_u) = -1$,

où $(g_s \mid p_t)$ et $(g_s \mid p_u)$ désignent les symboles de Legendre de $g_s$ par rapport à $p_t$ et $p_u$ (la définition des "symboles de Legendre" sera rappelée dans la description détaillée ci-dessous).

On peut montrer que, grâce à ces dispositions, les clés obtenues satisfont au "critère d'équivalence" défini ci-dessus.

Selon encore d'autres caractéristiques particulières, ledit procédé met en présence un contrôleur et ledit détenteur de clés, appelé ici "démonstrateur". Ce procédé est remarquable en ce qu'il comprend les étapes suivantes:

- le démonstrateur choisit aléatoirement un entier $r$, calcule "l'engagement" $R = r^v$ mod $n$, et envoie l'engagement au contrôleur,

- le contrôleur choisit aléatoirement $m$ "défis" $d_1,d_2,...,d_m$, où $i = 1,...,m$, et envoie ces défis au démonstrateur,

- le démonstrateur calcule la "réponse"

$$D = r \times Q_1^{d_1} \times Q_2^{d_2} \times ... \times Q_m^{d_m} \bmod n \ \ ,$$

et envoie cette réponse au contrôleur, et

- le contrôleur calcule

$$D^v \times G_1^{\varepsilon_1 d_1} \times G_2^{\varepsilon_2 d_2} \times ... \times G_m^{\varepsilon_m d_m} \bmod n$$

où, pour $i = 1,...,m$, $\varepsilon_i = +1$ dans le cas où $G_i \times Q_i^v = 1 \bmod n$ et $\varepsilon_i = -1$ dans le cas où $G_i = Q_i^v \bmod n$,

et vérifie que le résultat est bien égal à l'engagement $R$.

Il importe de noter qu'il n'est pas nécessaire pour un contrôleur et un démonstrateur qui mettent en oeuvre ce procédé d'échanger *l'intégralité* de l'engagement ou de la réponse: en effet, il leur est possible, par convention mutuelle, de n'échanger qu'une partie de ces données, ou encore le résultat du hachage de tout ou partie de ces données par une fonction de hachage prédéterminée.

Naturellement, on peut avantageusement accélérer la mise en oeuvre du procédé en calculant "à la chinoise".

Par exemple, concernant le calcul de l'engagement $R$, le démonstrateur peut opérer de la manière suivante. Pour un module $n = p_1 \times p_2$, où $p_1 < p_2$, soit $C$ le nombre positif inférieur à $p_1$ tel que $p_1$ divise $(p_2 \times C$-1) (ce nombre $C$ est connu sous le nom de "reste chinois"). Le démonstrateur choisit aléatoirement *deux* entiers $r_1$ et $r_2$ tels que $0 < r_1 < p_1$ et $0 < r_2 < p_2$, et calcule les deux "composantes d'engagement" $R_1 = r_1^v \bmod p_1$ et $R_2 = r_2^v \bmod p_2$. La valeur de l'engagement s'en déduit selon:

$$R = z \times p_2 + R_2 \ \ , \ \ \text{où} \ \ z = C \times (R_1 - R_2) \ \ .$$

Le démonstrateur peut également calculer "à la chinoise" pour obtenir la réponse $D$, de manière analogue à la méthode de calcul décrite ci-dessus pour le procédé de Fiat-Shamir.

Enfin, on notera que l'on peut se limiter à des défis vérifiant $0 \leq d_i \leq 2^k$ -1 pour $i = 1,...,m$ (ce qui a l'avantage de simplifier les calculs aussi bien pour le démonstrateur que pour le contrôleur). En effet, on vérifie facilement que, pour deux valeurs de $d_i$ différant de $2^k$, les valeurs de $Q_i^{d_i}$ correspondantes se déduisent l'une de l'autre par un facteur

$g_i$. Comme la publication des clés publiques $G_i$ implique essentiellement la divulgation des nombres de base $g_i$, on voit que l'on assure le même niveau de sécurité avec des valeurs de défis situées dans l'intervalle $0 \leq d_i \leq 2^k -1$, qu'avec des valeurs de défis sortant de cet intervalle.

Selon encore d'autres caractéristiques particulières, ledit procédé permet à un contrôleur de vérifier qu'un message $M$ qu'il a reçu lui a bien été envoyé par ledit détenteur de clés, appelé ici aussi "démonstrateur". Ce procédé est remarquable en ce qu'il comprend les étapes suivantes:

- le démonstrateur choisit aléatoirement un entier $r$, et calcule d'abord "l'engagement" $R = r^v \bmod n$, puis le "titre" $T = h(M,R)$, où $h$ est une fonction de hachage, et enfin envoie ce titre $T$ au contrôleur,
- le contrôleur choisit aléatoirement $m$ "défis" $d_1, d_2,...,d_m$, où $i=1,...,m$, et envoie ces défis au démonstrateur,
- le démonstrateur calcule la "réponse"

$$D = r \times Q_1^{d_1} \times Q_2^{d_2} \times ... \times Q_m^{d_m} \bmod n \ ,$$

et envoie cette réponse au contrôleur, et
- le contrôleur calcule

$$h\left(M, D^v \times G_1^{\varepsilon_1 d_1} \times G_2^{\varepsilon_2 d_2} \times ... \times G_m^{\varepsilon_m d_m} \bmod n\right)$$

où, pour $i= 1,...,m$, $\varepsilon_i = +1$ dans le cas où $G_i \times Q_i^v = 1 \bmod n$ et $\varepsilon_i = -1$ dans le cas où $G_i = Q_i^v \bmod n$, et vérifie que le résultat est bien égal au titre $T$.

La remarque faite ci-dessus concernant les valeurs des défis dans le procédé d'authentification d'entités s'applique évidemment aussi à ce procédé d'authentification de message.

On notera également que cette procédure d'authentification de message est parfois considérée comme une forme de signature du message.

Selon encore d'autres caractéristiques particulières, on peut mettre en oeuvre une autre façon de signer un message. Ce mode de réalisation, qui permet en effet audit détenteur de clés, appelé ici "signataire", de signer un message $M$ qu'il envoie à un contrôleur, est remarquable en ce qu'il comprend les étapes suivantes:

- le signataire choisit aléatoirement $m$ entiers $r_i$, où $i =1,...,m$, et calcule d'abord les engagements $R = r^v \bmod n$, puis le titre $T = h(M,R_1,R_2,...,R_m)$, où $h$ est une fonction de hachage produisant un mot de $m$ bits, et enfin envoie ce titre $T$ au contrôleur,
- le signataire identifie lui-même les bits $d_1, d_2,...,d_n$, du titre $T$ ,
- le signataire calcule les "réponses" $D_i = r_i \times Q_i^{d_i} \bmod n$, et envoie ces réponses au contrôleur, et
- le contrôleur calcule

$$h\left(M, D_1^v \times G_1^{\varepsilon_1 d_1} \bmod n, D_2^v \times G_2^{\varepsilon_2 d_2} \bmod n,..., D_m^v \times G_m^{\varepsilon_m d_m} \bmod n\right)$$

où, pour $i =1,...,m$, $\varepsilon_i = +1$ dans le cas où $G_i \times Q_i^v = 1 \bmod n$ et $\varepsilon_i = -1$ dans le cas où $G_i = Q_i^v \bmod n$, et vérifie que le résultat est bien égal au titre $T$.

Selon un deuxième aspect, l'invention concerne divers dispositifs.

Elle concerne ainsi, premièrement, un circuit électronique contenant un processeur et des mémoires. Ce circuit électronique est remarquable en qu'il peut être programmé pour mettre en oeuvre, en tant que ledit détenteur de clés, l'un quelconque des procédés de cryptographie succinctement exposés ci-dessus.

L'invention concerne aussi, deuxièmement, un circuit électronique dédié. Ce circuit électronique est remarquable en qu'il contient des microcomposants lui permettant de traiter des données de manière à mettre en oeuvre, en tant que ledit détenteur de clés, l'un quelconque des procédés de cryptographie succinctement exposés ci-dessus. Il peut en particulier s'agir d'un circuit intégré (en anglais, *"Application Specific Integrated Circuit"* ou "ASIC").

Ces deux circuits électroniques peuvent par exemple se présenter sous la forme d'une "puce électronique".

L'invention concerne aussi, troisièmement, un objet portable destiné à être connecté à un terminal pour échanger des données avec ce terminal. Cet objet portable est remarquable en ce qu'il contient un circuit électronique tel que décrit succinctement ci-dessus, et en ce qu'il est apte à stocker des données d'identification et des clés privées propres audit détenteur de clés.

Cet objet portable peut par exemple être une carte à puce, ou une clé USB.

L'invention concerne aussi, quatrièmement, un terminal apte à être connecté à un objet portable pour échanger des données avec cet objet portable. Ce terminal est remarquable en ce qu'il comporte un dispositif de traitement de données programmé pour mettre en oeuvre, en tant que ledit contrôleur, l'un quelconque des procédés de cryptographie succinctement exposés ci-dessus.

L'invention concerne aussi, cinquièmement, un système de cryptographie comprenant un objet portable et un terminal tels que décrits succinctement ci-dessus.

L'invention concerne aussi, sixièmement, un moyen de stockage de données inamovible comportant des instructions de code de programme informatique pour l'exécution, en tant que ledit détenteur de clés, des étapes de l'un quelconque des procédés de cryptographie succinctement exposés ci-dessus.

L'invention concerne aussi, septièmement, un moyen de stockage de données partiellement ou totalement amovible, comportant des instructions de code de programme informatique pour l'exécution, en tant que ledit détenteur de clés, des étapes de l'un quelconque des procédés de cryptographie succinctement exposés ci-dessus.

L'invention concerne aussi, huitièmement, un dispositif de traitement de données comprenant un moyen de stockage "détenteur de clés" tel que décrit succinctement ci-dessus.

Ce dispositif de traitement de données peut par exemple être un ordinateur personnel ou un serveur.

L'invention concerne aussi, neuvièmement, un moyen de stockage de données inamovible comportant des instructions de code de programme informatique pour l'exécution, en tant que ledit contrôleur, des étapes de l'un quelconque des procédés de cryptographie succinctement exposés ci-dessus.

L'invention concerne aussi, dixièmement, un moyen de stockage de données partiellement ou totalement amovible, comportant des instructions de code de programme informatique pour l'exécution, en tant que ledit contrôleur, des étapes de l'un quelconque des procédés de cryptographie succinctement exposés ci-dessus.

L'invention concerne aussi, onzièmement, un dispositif de traitement de données comprenant un moyen de stockage "contrôleur" tel que décrit succinctement ci-dessus.

Ce dispositif de traitement de données peut par exemple être un ordinateur personnel ou un serveur.

L'invention concerne aussi, douzièmement, un système de cryptographie comprenant un dispositif de traitement de données "détenteur de clés" et un dispositif de traitement de données "contrôleur" tels que décrits succinctement ci-dessus.

Les avantages offerts par ces dispositifs sont essentiellement les mêmes que ceux offerts par les procédés correspondants succinctement exposés ci-dessus.

L'invention vise également un programme d'ordinateur contenant des instructions telles que, lorsque ledit programme commande un dispositif de traitement de données programmable, lesdites instructions font que ledit dispositif de traitement de données met en oeuvre l'un des procédés de cryptographie succinctement exposés ci-dessus.

Les avantages offerts par ce programme d'ordinateur sont essentiellement les mêmes que ceux offerts par les procédés de cryptographie succinctement exposés ci-dessus.

D'autres aspects et avantages de l'invention apparaîtront à la lecture de la description détaillée ci-dessous.

Considérons un module, noté *n,* qui est en général le produit de *f* grands facteurs premiers (où *f* > 1), notés $p_1,..., p_f$, dont deux au moins sont distincts:

$$n = p_1 \times ... \times p_f \ , \ \text{où} \ \ p_1 \leq ... \leq p_f \ \ \text{et} \ \ p_1 < p_f \ .$$

A chaque facteur $p_j$, où *j* =1,..., *f,* on peut associer un entier strictement positif $b_j$ défini de la manière suivante: $(p_j -1)$ est divisible par $2^{b_j}$, mais pas par $2^{b_j+1}$ (autrement dit, $b_j$ est le plus grand entier tel que $(p_j -1) / 2^{b_j-1}$ soit pair). On vérifie aisément que $b_j =1$ si $p_j = 3$ mod 4, et $b_j >1$ 1 si $p_j = 1$ mod 4.

Lorsqu'une entité souhaite devenir un détenteur de clés, elle peut demander à une autorité de certification de lui attribuer un module RSA *n*. L'entité construit alors un nombre *m* ≥ 1 de clés privées $Q_1$, $Q_2$,...,$Q_m$, et publie ledit module *n*, un "exposant" v et des clés publiques respectives $G_1$, $G_2$,...,$G_m$.

Selon l'invention, ces diverses quantités obéissent aux conditions suivantes:

- l'exposant est de la forme

$$v = 2^{b+k} \ ,$$

où $b = \max(b_1,..., b_f)$ et $k \geq 1$,

- chaque clé publique $G_i$ (où $i = 1,...,\mathrm{m}$) est de la forme

$$G_i = g_i^{2^{a_i}} \bmod n \ ,$$

où les nombres $g_i$ (appelés "nombres de base") sont des entiers strictement supérieurs à 1, et où les nombres $\alpha_i$ sont des entiers tels que $1 \leq \alpha_i \leq b$ et tels que l'un d'entre eux au moins est strictement supérieur à 1, et

- chaque paire de clés $(Q_i, G_i)$ (où $i = 1,...,m$) vérifie

$$\bullet \quad \text{soit la relation} \ \ G_i = Q_i^v \bmod n \ , \qquad\qquad\qquad (1i)$$

$$\bullet \quad \text{soit la relation} \ \ G_i \times Q_i^v = 1 \bmod n \ . \qquad\qquad\qquad (1'i)$$

On peut montrer que, pour que des paires de clés satisfaisant à ces conditions puissent exister, il faut que le rang de chaque clé $G_i$ par rapport à chaque facteur premier $p_j$ soit impair. On rappelle à cet égard que "le rang $\lambda$ par rapport à $p$ " d'un élément $x$ non-nul du corps des entiers modulo $p$ (où $p$ est premier) est le plus petit entier $\lambda$ strictement positif tel que $x^\lambda = 1 \bmod p$ (où les puissances successives de $x$ sont prises modulo $p$).

La condition selon laquelle le rang de $G_i$ par rapport à chacun des facteurs premiers du module $n$ est impair implique qu'aucun facteur premier $p_j$ ne peut être tel que $(p_j -1)$ soit égal à une puissance de 2; mais les nombres premiers vérifiant cette condition (par exemple 3, 5, 17, ou 257) sont rares, et même très rares si l'on choisit des grands nombres pour les facteurs premiers du module.

Cette propriété des clés publiques peut être obtenue en choisissant les entiers $g_i$ et $a_i$ conformément à la règle suivante:

$$a_i \geq h(g_i) \bmod p_j \ \ \text{pour tout} \ \ j = 1,...,f \ ,$$

où, pour tout entier $x$ non-nul du corps des entiers modulo $p$ (où $p$ est premier), on définit la "hauteur de $x$ par rapport à $p$ ", notée $h(x) \bmod \mathrm{p}$ , comme étant la plus grande puissance de 2 qui divise le rang de $x$ par rapport à $p$.

On va maintenant présenter, à titre d'exemple non limitatif, un mode de réalisation particulier.

Selon ce mode de réalisation, on choisit les facteurs premiers $p_j$ du module $n$ de telle sorte que l'un au moins d'entre eux soit congru à 1 modulo 4 (les autres facteurs pouvant être congrus soit à 1, soit à 3 modulo 4). Il résulte des propriétés des nombres $b_j$ associés énoncées ci-dessus que:

$$b > 1 \ .$$

De plus, on prend

$$G_i = g_i^{2^b} \bmod n \ , \ \text{pour tout} \ i = 1,...,m \ . \qquad\qquad\qquad (4)$$

On notera que, par contraste, les clés définies dans la demande WO-00/45550 (vérifiant, comme indiqué ci-dessus, $Q_i^v = g_i^2 \bmod n$) n'existent que pour les modules dont *tous* les facteurs premiers sont congrus à 3 modulo 4.

On peut montrer que les clés publiques $G_i$ définies par l'équation (4) sont de rang impair par rapport à chacun des facteurs premiers du module.

Enfin, on requiert qu'il existe au moins un nombre $g_s$, parmi lesdits nombres de base $g_1,..., g_m$, et deux nombres $p_i$ et $p_u$ différents de 2 parmi lesdits facteurs premiers $p_1,..., p_f$, tels que

$$- \text{si } b_t = b_u, \text{ alors } (g_s \mid p_t) = -(g_s \mid p_u), \text{ et} \qquad (5a$$

$$- \text{si } b_t < b_u, \text{ alors } (g_s \mid p_u) = -1, \qquad (5b)$$

où les nombres $b_t$ et $b_u$ (voir définition ci-dessus) sont déterminés par rapport à $p_t$ et $p_u$, et $(g_s \mid p_t)$ et $(g_s \mid p_u)$ désignent les symboles de Legendre de $g_s$ correspondants.

On rappelle à cet égard que le "symbole de Legendre par rapport à $p$ ", noté ici $(x \mid p)$, d'un élément $x$ non-nul du corps des entiers modulo $p$ (où $p$ est un nombre premier différent de 2) est égal à $x^{(p-1)/2} \bmod p$. On montre facilement que $(x \mid p) = 0$ si $x$ est un multiple de $p$, $(x \mid p) = +1$ si $x$ est égal au carré modulo $p$ d'un autre élément du corps, et $(x \mid p) = -1$ sinon.

Le mode de réalisation des équations (5a-5b) représente un exemple de mise en oeuvre de l'invention où les clés satisfont au "critère d'équivalence", c'est-à-dire qu'il est impossible, à partir des paramètres publics $n$ , $v$ et $G_1$, $G_2,...,G_m$, de calculer (en un temps raisonnable) les clés privées $Q_1,Q_2,...,Q_m$, à moins de connaître les facteurs premiers du module.

En revanche, si l'on connaît la factorisation du module, on peut obtenir les clés privées de la façon suivante. Soit A le plus petit commun multiple des nombres $(p_j - 1) / 2^b$, où $j = 1,..., f$, et soit u le plus petit entier positif tel que ($u \times v+1$) soit un multiple de A. Chaque clé privée vérifie:

$$Q_i \times G_i^u = 1 \bmod n \quad \text{si l'on a choisi l'équation (1}i\text{) (soit } G_i = Q_i^v \bmod n\text{), ou}$$

$$Q_i = G_i^u \bmod n \quad \text{si l'on a choisi l'équation (1'}i\text{) (soit } G_i \times Q_i^v = 1 \bmod n\text{).}$$

On peut également calculer les clés privées $Q_1,Q_2,...,Q_m$, au moyens de calculs "à la chinoise".

On terminera par quelques remarques concernant les nombres de base.

Il a été constaté que les calculs effectués durant la mise en oeuvre du procédé selon l'invention sont d'autant plus rapides que les nombres de base sont faibles. Il est donc conseillé de les choisir aussi petits que possible.

Par exemple, on peut choisir les nombres de base parmi les 54 premiers nombres premiers (le cinquante-quatrième nombre premier étant 251).

En variante, on peut prendre systématiquement les $m$ premiers nombres premiers comme nombres de base, c'est-à-dire, $g_1 = 2$, $g_2 = 3$ , $g_3 = 5$ , $g_4 = 7$, $g_5 = 11$, et ainsi de suite. Cette approche a l'avantage de la simplicité, mais elle ne garantit pas que l'on obtienne un jeu de clés satisfaisant au critère d'équivalence. Cependant, on peut montrer que la proportion de jeux ne satisfaisant pas au critère d'équivalence est inférieure à $1/2^m$ ; par exemple, pour $m = 16$ (correspondant à $g_{16} = 53$), cette proportion vaut moins de 1/65 536.

## Revendications

1.   Procédé de cryptographie à clés asymétriques mettant en jeu un détenteur de clés possédant un nombre $m \geq 1$ de clés privées $Q_1,Q_2,...,Q_m$ et de clés publiques respectives $G_1,G_2,...,G_m$, chaque paire de clés $(Q_i,G_i)$ où $i = 1,...,m$ vérifiant soit la relation $G_i = Q_i^v \bmod n$, soit la relation $G_i \times Q_i^v = 1 \bmod n$, où $n$ est un entier public égal au produit de $f$ facteurs premiers privés où $f > 1$ notés $p_1,..., p_f$, dont deux au moins sont distincts, et l'exposant $v$ est un entier public égal à une puissance de 2, **caractérisé en ce que**

$$v = 2^{b+k},$$

où $k$ est un entier strictement positif et $b = \max(b_1,...,b_f)$, où $b_j$ où $j = 1,...,$ f est le plus grand entier tel que $(p_j -1) / 2^{b_j-1}$ soit pair, et **en ce que** chaque clé publique $G_i$ où $i = 1,...,$m est de la forme

$$G_i = g_i^{2^{a_i}} \bmod n \,,$$

où les nombres $g_i$, appelés "nombres de base", sont des entiers strictement supérieurs à 1, et où les nombres $a_i$ sont des entiers tels que $1 \le a_i \le$ b et tels que l'un d'entre eux au moins est strictement supérieur à 1.

2.  Procédé selon la revendication 1, **caractérisé en ce que** l'un au moins desdits facteurs premiers $p_1,...,p_f$ est congru à 1 modulo 4, et **en ce que** les entiers $a_i$ où $i =1,...,$m sont tous égaux audit nombre $b.$

3.  Procédé selon la revendication 1 ou la revendication 2, **caractérisé en ce que** il existe au moins un nombre $g_s$, parmi lesdits nombres de base $g_1,..., g_m$, et deux nombres $p_t$ et $p_u$ différents de 2 parmi lesdits facteurs premiers $p_1,..,p_f$, tels que, compte tenu desdits nombres $b_1,...,b_f$,

$$\text{- si } b_t = b_u \text{, alors } (g_s \,|\, p_t) = - (g_s \,|\, p_u) \,,$$

et

$$\text{- si } b_t < b_u \text{, alors } (g_s \,|\, p_u) = -1 \ ,$$

où $(g_s \,|\, p_t)$ et $(g_s \,|\, p_u)$ désignent les symboles de Legendre de $g_s$ par rapport à $p_t$, et $p_u$.

4.  Procédé selon l'une quelconque des revendications précédentes, **caractérisé en ce que** les nombres de base $g_1,...,g_m$ sont des nombres premiers.

5.  Procédé selon la revendication 4, **caractérisé en ce que** les nombres de base $g_1,..., g_m$ sont choisis parmi les 54 premiers nombres premiers.

6.  Procédé selon l'une quelconque des revendications 1 à 5, dans lequel sont mis en présence un contrôleur et ledit détenteur de clés, appelé ici "démonstrateur", **caractérisé en ce qu'**il comprend les étapes suivantes:

    - le démonstrateur choisit aléatoirement un entier $r$, calcule "l'engagement" $R = r^v \bmod n,$ et envoie l'engagement au contrôleur,
    - le contrôleur choisit aléatoirement $m$ "défis" $d_1,d_2,...,d_m$, et envoie ces défis au démonstrateur,
    - le démonstrateur calcule la "réponse"

$$D = r \times Q_1^{d_1} \times Q_2^{d_2} \times ... \times Q_m^{d_m} \bmod n \ ,$$

    et envoie cette réponse au contrôleur, et
    - le contrôleur calcule

$$D^v \times G_1^{\varepsilon_1 d_1} \times G_2^{\varepsilon_2 d_2} \times ... \times G_m^{\varepsilon_m d_m} \bmod n$$

où, pour $i =1,..., m,$ $\varepsilon_i = +1$ dans le cas où $G_i \times Q_i^v = 1 \bmod n$ et $\varepsilon_i = -1$ dans le cas où $G_i = Q_i^v \bmod n \,,$ et vérifie que le résultat est bien égal à l'engagement R.

**7.** Procédé selon l'une quelconque des revendications 1 à 5, permettant à un contrôleur de vérifier qu'un message M qu'il a reçu lui a bien été envoyé par ledit détenteur de clés, appelé ici "démonstrateur", **caractérisé en ce qu'**il comprend les étapes suivantes:

- le démonstrateur choisit aléatoirement un entier *r,* et calcule d'abord "l'engagement" $R = r^v$ mod *n,* puis le "titre" $T = h(M,R)$, où *h* est une fonction de hachage, et enfin envoie ce titre *T* au contrôleur,
- le contrôleur choisit aléatoirement *m* "défis" $d_1, d_2, ..., d_m$, et envoie ces défis au démonstrateur,
- le démonstrateur calcule la "réponse"

$$D = r \times Q_1^{d_1} \times Q_2^{d_2} \times ... \times Q_m^{d_m} \bmod n \ ,$$

et envoie cette réponse au contrôleur, et
- le contrôleur calcule

$$h\left(M, D^v \times G_1^{\varepsilon_1 d_1} \times G_2^{\varepsilon_2 d_2} \times ... \times G_m^{\varepsilon_m d_m} \bmod n\right)$$

où, pour *i* =1,..., *m*, $\varepsilon_i$ = +1 dans le cas où $G_i \times Q_i^v = 1 \bmod n$ et $\varepsilon_i$ = -1 dans le cas où $G_i = Q_i^v \bmod n$,

et vérifie que le résultat est bien égal au titre *T*.

**8.** Procédé selon la revendication 6 ou la revendication 7, **caractérisé en ce que** les défis vérifient $0 \le d_i \le 2^k$ -1 pour *i* =1,...,*m*.

**9.** Procédé selon l'une quelconque des revendications 1 à 5, permettant audit détenteur de clés, appelé ici "signataire", de signer un message M qu'il envoie à un contrôleur, **caractérisé en ce qu'**il comprend les étapes suivantes:

- le signataire choisit aléatoirement *m* entiers r$_i$, où *i* = 1,...,*m*, et calcule d'abord les engagements

$R_i = r_i^v \bmod n$ , puis le titre $T = h(M, R_1, R_2, ..., R_m)$, où h est une fonction de hachage produisant un mot de *m* bits, et enfin envoie ce titre *T* au contrôleur,
- le signataire identifie lui-même les bits $d_1, d_2, ..., d_m$ du titre *T*,

- le signataire calcule les "réponses" $D_i = r_i \times Q_i^{d_i} \bmod n$ , et envoie ces réponses au contrôleur, et

- le contrôleur calcule

$$h\left(M, D_1^v \times G_1^{\varepsilon_1 d_1} \bmod n, D_2^v \times G_2^{\varepsilon_2 d_2} \bmod n, ..., D_m^v \times G_m^{\varepsilon_m d_m} \bmod n\right)$$

où, pour *i* =1,..., *m*, $\varepsilon_i$ = +1 dans le cas où $G_i \times Q_i^v = 1 \bmod n$ et $\varepsilon_i$ = -1 dans le cas où $G_i = Q_i^v \bmod n$ ,

et vérifie que le résultat est bien égal au titre *T*.

**10.** Circuit électronique contenant un processeur et des mémoires, **caractérisé en ce qu'**il est programmé pour mettre en oeuvre, en tant que ledit détenteur de clés, un procédé selon l'une quelconque des revendications 1 à 9.

**11.** Circuit électronique dédié, **caractérisé en qu'**il contient des microcomposants lui permettant de traiter des données de manière à mettre en oeuvre, en tant que ledit détenteur de clés, un procédé selon l'une quelconque des revendications 1 à 9.

**12.** Objet portable destiné à être connecté à un terminal pour échanger des données avec ce terminal, **caractérisé en ce qu'**il contient un circuit électronique selon la revendication 10 ou la revendication 11, et **en ce qu'**il est apte à stocker des données d'identification et des clés privées propres audit détenteur de clés.

**13.** Terminal apte à être connecté à un objet portable pour échanger des données avec cet objet portable, **caractérisé en ce qu'**il comporte un dispositif de traitement de données programmé pour mettre en oeuvre, en tant que ledit contrôleur, un procédé selon l'une quelconque des revendications 1 à 9.

**14.** Système de cryptographie comprenant un objet portable selon la revendication 12 et un terminal selon la revendication 13.

**15.** Moyen de stockage de données inamovible comportant des instructions de code de programme informatique pour l'exécution, en tant que ledit détenteur de clés, des étapes d'un procédé selon l'une quelconque des revendications 1 à 9.

**16.** Moyen de stockage de données partiellement ou totalement amovible, comportant des instructions de code de programme informatique pour l'exécution, en tant que ledit détenteur de clés, des étapes d'un procédé selon l'une quelconque des revendications 1 à 9.

**17.** Dispositif de traitement de données comprenant un moyen de stockage selon la revendication 15 ou la revendication 16.

**18.** Moyen de stockage de données inamovible comportant des instructions de code de programme informatique pour l'exécution, en tant que ledit contrôleur, des étapes d'un procédé selon l'une quelconque des revendications 1 à 9.

**19.** Moyen de stockage de données partiellement ou totalement amovible, comportant des instructions de code de programme informatique pour l'exécution, en tant que ledit contrôleur, des étapes d'un procédé selon l'une quelconque des revendications 1 à 9.

**20.** Dispositif de traitement de données, **caractérisé en ce qu'**il comprend un moyen de stockage selon la revendication 18 ou la revendication 19.

**21.** Système de cryptographie comprenant un dispositif de traitement de données selon la revendication 17 et un dispositif de traitement de données selon la revendication 20.

**22.** Programme d'ordinateur contenant des instructions telles que, lorsque ledit programme commande un dispositif de traitement de données programmable, lesdites instructions font que ledit dispositif de traitement de données met en oeuvre un procédé selon l'une quelconque des revendications 1 à 9.

**Claims**

**1.** An asymmetrical key cryptography method involving a keyholder having a number $m \geq 1$ of private keys $Q_1$, $Q_2$, ..., $Q_m$ and respective public keys $G_1$, $G_2$ ,..., $G_m$, each pair of keys $(Q_i, G_i)$ where $i = 1, ..., m$ satisfying either the relationship $G_i = Q_i^v \bmod n$ or the relationship $G_i \times Q_i^v = 1 \bmod n$, where $n$ is a public integer equal to the product of $f$ private prime factors called $p_i,..., p_f$, where $f > 1$, at least two of which are different, and the exponent v is a public integer equal to a power of 2, **characterized in that**:

$$v = 2^{b+k},$$

where $k$ is a strictly positive integer and $b = \max (b_1,...,b_f)$, where $b_j$, for $j = 1,..., f$, is the highest integer such that $(p_j -1) / 2^{b_j-1}$ is even, and **in that** each public key $G_i$, where $i = 1,..., m,$ has the form

$$G_i = g_i^{2^{a_i}} \bmod n,$$

where the numbers $g_i$, called "base numbers", are integers strictly greater than 1, and where the numbers $a_i$ are

integers such that $1 \leq a_i \leq b$ and such that at least one of them is strictly greater than 1.

2. A method according to claim 1, **characterized in that** at least one of said prime factors $p_1,...,p_f$ is congruent to 1 modulo 4, and **in that** the integers $a_i$ where $i =1,...,m$ are all equal to said number $b$.

3. A method according to claim 1 or claim 2, **characterized in that** said base numbers $g_1,...,g_m$ include at least one number $g_s$ and said prime factors $p_1, ..., p_f$ include at least two numbers $p_t$ and $p_u$ other than 2 such that, given said numbers $b_1,...,b_f$,
   if $b_t = b_u$, then $(g_s|p_t) = -(g_s | p_u)$, and
   if $b_t < b_u$ , then $(g_s|p_u) = -1$,
   where $(g_s | p_t)$ and $(g_s | p_u)$ denote the Legendre symbols of $g_s$ relative to $p_t$ and $p_u$.

4. A method according to any one of the previous claims, **characterized in that** the base numbers $g_1,...,g_m$ are prime numbers.

5. A method according to claim 4, **characterized in that** the base numbers $g_1, ..., g_m$ are chosen from the first 54 prime numbers.

6. A method according to any one of claims 1 to 5, involving a controller and said keyholder, here called the "claimant", **characterized in that** the method comprises the following steps:

   - the claimant chooses at random an integer $r$, calculates the "witness" $R = r^v \bmod n$ and sends the witness to the controller,
   - the controller chooses at random $m$ "challenges" $d_1, d_2,...,d_m$, and sends the challenges to the claimant,
   - the claimant calculates the "response"

   $$D = r \times Q_1^{d_1} \times Q_2^{d_2} \times ... \times Q_m^{d_m} \bmod n$$

   and sends the response to the controller, and
   - the controller calculates

   $$D^v \times G_1^{\varepsilon_1 d_1} \times G_2^{\varepsilon_2 d_2} \times ... \times G_m^{\varepsilon_m d_m} \bmod n$$

   where, for $i =1, ...m$, $\varepsilon_i = +1$ if $G_i \times Q_i^v = 1 \bmod n$ and $\varepsilon_i = -1$ if $G_i = Q_i^v \bmod n$, and verifies that the result is equal to the witness $R$.

7. A method according to any one of claims 1 to 5, enabling a controller to verify that a message $M$ that it has received was sent to it by said keyholder, here called the "claimant", **characterized in that** the method comprises the following steps:

   - the claimant chooses at random an integer $r$ and first calculates the "witness" $R = r^v \bmod n$, then calculates the "token" $T = h(M, R)$, where $h$ is a hashing function, and finally sends the token $T$ to the controller,
   - the controller chooses at random $m$ "challenges" $d_1,d_2,...,d_m$, and sends the challenges to the claimant,
   - the claimant calculates the "response"

   $$D = r \times Q_1^{d_1} \times Q_2^{d_2} \times ... \times Q_m^{d_m} \bmod n,$$

   and sends the response to the controller, and
   - the controller calculates

$$h(M, D^v \times G_1^{\varepsilon_1 d_1} \times G_2^{\varepsilon_2 d_2} \times ... \times G_m^{\varepsilon_m d_m} \bmod n)$$

where, for $i = 1,..., m$, $\varepsilon_i = +1$ if $G_i \times Q_i^v = 1 \bmod n$ and $\varepsilon_i = -1$ if $G_i = Q_i^v \bmod n$, and verifies that the result is equal to the token $T$.

**8.** A method according to claim 6 or claim 7, **characterized in that** the challenges satisfy the condition $0 \leq d_i \leq 2^k - 1$ for $i = 1,...,m$.

**9.** A method according to any one of claims 1 to 5, enabling said keyholder, here called the "signatory", to sign a message M that it sends to a controller, **characterized in that** the method comprises the following steps:

- the signatory chooses at random $m$ integers $r_i$, where $i = 1, ..., m$, and first calculates the witnesses

$R_i = r_i^v \bmod n$, then calculates the token $T = h(M, R_1, R_2, ..., R_m)$, where h is a hashing function producing a word of $m$ bits, and finally sends the token $T$ to the controller,
- the signatory identifies the bits $d_1, d_2, ..., d_m$ of the token $T$,

- the signatory calculates the "responses" $D_i = r_i \times Q_i^{d_i} \bmod n$ and sends the responses to the controller, and
- the controller calculates

$$h(M, D_1^v \times G_1^{\varepsilon_1 d_1} \bmod n, D_2^v \times G_2^{\varepsilon_2 d_2} \bmod n, ..., D_m^v \times G_m^{\varepsilon_m d_m} \bmod n)$$

where, for $i = 1,..., m$, $\varepsilon_i = +1$ if $G_i \times Q_i^v = 1 \bmod n$ and $\varepsilon_i = -1$ if $G_i = Q_i^v \bmod n$, and verifies that the result is equal to the token $T$.

**10.** An electronic circuit including a processor and memories, **characterized in that** the electronic circuit is programmed to act as said keyholder in executing a method according to any one of claims 1 to 9.

**11.** A dedicated electronic circuit, **characterized in that** it comprises microcomponents enabling the electronic circuit to process data in such manner as to act as said keyholder in executing a method according to any one of claims 1 to 9.

**12.** A portable object adapted to be connected to a terminal to exchange data with that terminal, **characterized in that** the portable object includes an electronic circuit according to claim 10 or claim 11 and is adapted to store identification data and private keys specific to said key holder.

**13.** A terminal adapted to be connected to a portable object to exchange data with that portable object, **characterized in that** the terminal includes a data processing device programmed to act as said controller in executing a method according to any one of claims 1 to 9.

**14.** A cryptography system comprising a portable object according to claim 12 and a terminal according to claim 13.

**15.** Non-removable data storage means containing data processing program code instructions for, as said keyholder, executing the steps of a method according to any one of claims 1 to 9.

**16.** Partially or totally removable data storage means containing data processing program code instructions for, as said keyholder, executing the steps of a method according to any one of claims 1 to 9.

**17.** A data processing device comprising storage means according to claim 15 or claim 16.

**18.** Non-removable data storage means containing data processing program code instructions for, as said controller, executing the steps of a method according to any one of claims 1 to 9.

**19.** Partially or totally removable data storage means containing data processing program code instructions for, as said controller, executing the steps of a method according to any one of claims 1 to 9.

**20.** A data processing device, **characterized in that** it comprises storage means according to claim 18 or claim 19.

**21.** A cryptography system comprising a data processing device according to claim 17 and a data processing device according to claim 20.

**22.** A computer program containing instructions such that, when said program controls a programmable data processing device, said instructions cause said data processing device to execute a method according to any one of claims 1 to 9.


**Patentansprüche**

**1.** Asymmetrisches Verschlüsselungsverfahren, bei dem ein Schlüsselinhaber eine Anzahl $m \geq 1$ von privaten Schlüsseln $Q_1, Q_2, ..., Q_m$ und zugehörige öffentliche Schlüssel $G_1, G_2, ..., G_m$ besitzt, wobei jedes Schlüsselpaar $(Q_i, G_i)$ mit $i = 1,...,m$ entweder die Beziehung $G_i = Q_i^v \bmod n$ oder die Beziehung $G_i \times Q_i^v = 1 \bmod n$ erfüllt, wobei $n$ eine öffentliche Ganzzahl ist, die gleich dem Produkt von $f$ privaten Primfaktoren, genannt $p_i,..., p_f$, mit $f > 1$ ist, von denen zumindest zwei unterschiedlich sind, und der Exponent v eine öffentliche Ganzzahl ist, die gleich einer Potenz von 2 ist, **dadurch gekennzeichnet, dass**

$$v = 2^{b+k} \text{ gilt,}$$

wobei $k$ eine streng positive Ganzzahl und b = $\max(b_1,..., b_f)$ ist, wobei $b_j$ mit $j = 1, ..., f$ die größte Ganzzahl ist, sodass $(p_j - 1) / 2^{b_j - 1}$ gerade ist, und dass jeder öffentliche Schlüssel $G_i$ mit $i = 1,..., m$ die Form

$$G_i = g_i^{2^{a_i}} \bmod n$$

aufweist, wobei die Zahlen $g_i$, "Basiszahlen" genannt, Ganzzahlen sind, welche streng größer als 1 sind, und wobei die Zahlen $a_i$ Ganzzahlen sind, sodass $1 \leq a_i \leq b$ gilt und sodass zumindest eine davon streng größer als 1 ist.

**2.** Verfahren nach Anspruch 1, **dadurch gekennzeichnet, dass** zumindest einer der Primfaktoren $p_1,..., p_f$ kongruent zu 1 modulo 4 ist, und dass sämtliche Ganzzahlen $a_i$ mit $i = 1,..., m$ gleich der Zahl b sind.

**3.** Verfahren nach Anspruch 1 oder Anspruch 2, **dadurch gekennzeichnet, dass** die Basiszahlen $g_1, ..., g_m$ zumindest eine Zahl $g_s$ beinhalten, und dass die Primfaktoren $p_1,..., p_f$ zumindest zwei Zahlen $p_t$ and $p_u$ beinhalten, die von 2 verschieden sind, sodass für $b_1,..., b_f$ gilt:

wenn $b_t = b_u$ ist, gilt $(g_s \mid p_t) = -(g_s \mid p_u)$, und
wenn $b_t < b_u$ ist, gilt $(g_s \mid p_u) = -1$,

wobei $(g_s \mid p_t)$ und $(g_s \mid p_u)$ die Legendre-Symbole von $g_s$ bezüglich $p_t$ und $p_u$ bezeichnen.

**4.** Verfahren nach einem der vorhergehenden Ansprüche, **dadurch gekennzeichnet, dass** die Basiszahlen $g_1,..., g_m$ Primzahlen sind.

**5.** Verfahren nach Anspruch 4, **dadurch gekennzeichnet, dass** die Basiszahlen $g_1, ..., g_m$ aus den ersten 54 Primzahlen gewählt werden.

**6.** Verfahren nach einem der Ansprüche 1 bis 5, bei dem eine Steuerung und der Schlüsselinhaber, hier "Antragsteller" genannt, eingesetzt werden, **dadurch gekennzeichnet, dass** das Verfahren folgende Schritte umfasst:

- der Antragsteller wählt zufällig eine Ganzzahl *r,* berechnet den "Zeugen" $R = r^v$ mod *n* und sendet den Zeugen an die Steuerung,
- die Steuerung wählt zufällig *m* "Herausforderungen" $d_1, d_2, ..., d_m$ und sendet die Herausforderungen an den Antragsteller,
- der Antragsteller berechnet die "Antwort"

$$D = r \times Q_1^{d_1} \times Q_2^{d_2} \times ... \times Q_m^{d_m} \bmod n$$

und sendet die Antwort an die Steuerung, und
- die Steuerung berechnet

$$D^v \times G_1^{\varepsilon_1 d_1} \times G_2^{\varepsilon_2 d_2} \times ... \times G_m^{\varepsilon_m d_m} \bmod n,$$

wobei für *i* =1,...m gilt, dass $\varepsilon_i$ =+1 ist, wenn $G_i \times Q_i^v = 1 \bmod n$ ist, und $\varepsilon_i$ = -1 ist, wenn $G_i = Q_i^v \bmod n$ ist, und überprüft, ob das Ergebnis gleich dem Zeugen *R* ist.

7. Verfahren nach einem der Ansprüche 1 bis 5, das es einer Steuerung gestattet, zu überprüfen, ob eine Nachricht *M*, die sie em*pf*angen hat, vom Schlüsselinhaber, hier "Antragsteller" genannt, gesendet worden ist, **dadurch gekennzeichnet, dass** das Verfahren folgende Schritte umfasst:

- der Antragsteller wählt zufällig eine Ganzzahl *r* und berechnet zuerst den "Zeugen" $R = r^v$ mod *n,* danach das "Token" *T* = *h*(*M, R*), wobei h eine Hash-Funktion ist, und sendet das Token *T* schließlich zur Steuerung,
- die Steuerung wählt zufällig *m* "Herausforderungen" $d_1, d_2, ..., d_m$ und sendet die Herausforderungen an den Antragsteller,
- der Antragsteller berechnet die "Antwort"

$$D = r \times Q_1^{d_1} \times Q_2^{d_2} \times ... \times Q_m^{d_m} \bmod n$$

und sendet die Antwort an die Steuerung, und
- die Steuerung berechnet

$$h(M, D^v \times G_1^{\varepsilon_1 d_1} \times G_2^{\varepsilon_2 d_2} \times ... \times G_m^{\varepsilon_m d_m} \bmod n),$$

wobei für *i* =1, ..., *m* gilt, dass $\varepsilon_i$ = +1 ist, wenn $G_i \times Q_i^v = 1 \bmod n$ ist, und $\varepsilon_i$ = -1 ist, wenn $G_i = Q_i^v \bmod n$ ist, und überprüft, ob das Ergebnis gleich dem Token *T* ist.

8. Verfahren nach Anspruch 6 oder Anspruch 7, **dadurch gekennzeichnet, dass** die Herausforderungen die Bedingung $0 \le d_i \le 2^k$ -1 für *i* =1,..., *m* erfüllen.

9. Verfahren nach einem der Ansprüche 1 bis 5, das es dem Schlüsselinhaber, hier "Zeichnungsberechtigter" genannt, ermöglicht, eine Nachricht M zu unterzeichnen, die er an eine Steuerung sendet, **dadurch gekennzeichnet, dass** das Verfahren folgende Schritte umfasst:

- der Zeichnungsberechtigte wählt zufällig *m* Ganzzahlen $r_i$, wobei *i* =1,..., *m* ist, und berechnet zunächst die Zeugen $R_i = r_i^v \bmod n,$ danach das Token
*T* = *h*(*M,R_1,R_2,...,R_m*), wobei *h* ein Hash-Funktion ist, die ein Wort mit *m* Bit erzeugt, und sendet dann das Token *T* an die Steuerung,
- der Zeichnungsberechtigte identifiziert die Bits $d_1, d_2, ..., d_m$ des Tokens *T*,

- der Zeichnungsberechtigte berechnet die "Antworten" $D_i = r_i \times Q_i^{d_i} \bmod n$ und sendet die Antworten an die Steuerung, und
- die Steuerung berechnet

$$h(M, D_1^v \times G_1^{\varepsilon_1 d_1} \bmod n, D_2^v \times G_2^{\varepsilon_2 d_2} \bmod n, ..., D_m^v \times G_m^{\varepsilon_m d_m} \bmod n),$$

wobei für *i* = 1, ..., *m* gilt, dass $\varepsilon_i$ = +1 1 ist, wenn $G_i \times Q_i^v = 1 \bmod n$ ist, und $\varepsilon_i$ = -1 ist, wenn $G_i = Q_i^v \bmod n$ ist,

und überprüft, ob das Ergebnis gleich dem Token *T* ist.

10. Elektronischer Schaltkreis mit einem Prozessor und Speichern, **dadurch gekennzeichnet, dass** der elektronische Schaltkreis programmiert ist, um als Schlüsselinhaber ein Verfahren gemäß einem der Ansprüche 1 bis 9 auszuführen.

11. Dedizierter elektronischer Schaltkreis, **dadurch gekennzeichnet, dass** er Mikrokomponenten umfasst, die es dem elektronischen Schaltkreis ermöglichen, Daten solcherart zu verarbeiten, dass er als Schlüsselinhaber ein Verfahren gemäß einem der Ansprüche 1 bis 9 ausführt.

12. Tragbares Objekt, das zum Anschluss an eine Datenstation vorgesehen ist, um Daten mit der Datenstation auszutauschen, **dadurch gekennzeichnet, dass** das tragbare Objekt einen elektronischen Schaltkreis gemäß Anspruch 10 oder Anspruch 11 beinhaltet und geeignet ist, Identifizierungsdaten und private Schlüssel spezifisch für den Schlüsselinhaber zu speichern.

13. Datenstation, die zum Anschluss an ein tragbares Objekt geeignet ist, um Daten mit dem tragbaren Objekt auszutauschen, **dadurch gekennzeichnet, dass** die Datenstation ein datenverarbeitendes Gerät beinhaltet, das programmiert ist, um als Steuerung ein Verfahren gemäß einem der Ansprüche 1 bis 9 auszuführen.

14. Kryptographiesystem, umfassend ein tragbares Objekt gemäß Anspruch 12 und eine Datenstation gemäß Anspruch 13.

15. Nicht-entfernbarer Datenspeicher, der Code-Anweisungen eines Datenverarbeitungsprogramms zur Ausführung der Schritte eines Verfahrens gemäß einem der Ansprüche 1 bis 9 als Schlüsselinhaber beinhaltet.

16. Teilweise oder vollständig entfernbarer Datenspeicher, der Code-Anweisungen eines Datenverarbeitungsprogramms zur Ausführung der Schritte eines Verfahrens gemäß einem der Ansprüche 1 bis 9 als Schlüsselinhaber beinhaltet.

17. Datenverarbeitungsgerät, umfassend einen Speicher gemäß Anspruch 15 oder Anspruch 16.

18. Nicht-entfernbarer Datenspeicher, der Code-Anweisungen eines Datenverarbeitungsprogramms zur Ausführung der Schritte eines Verfahrens gemäß einem der Ansprüche 1 bis 9 als Steuerung beinhaltet.

19. Teilweise oder vollständig entfernbarer Datenspeicher, der Code-Anweisungen eines Datenverarbeitungsprogramms zur Ausführung der Schritte eines Verfahrens gemäß einem der Ansprüche 1 bis 9 als Steuerung beinhaltet.

20. Datenverarbeitungsgerät, **dadurch gekennzeichnet, dass** es einen Speicher gemäß Anspruch 18 oder Anspruch 19 aufweist.

21. Kryptographiesystem, umfassend ein Datenverarbeitungsgerät gemäß Anspruch 17 und ein Datenverarbeitungsgerät gemäß Anspruch 20.

22. Computerprogramm, das Anweisungen beinhaltet, sodass, wenn das Programm ein programmierbares Datenverarbeitungsgerät steuert, die Anweisungen bewirken, dass das Datenverarbeitungsgerät ein Verfahren gemäß einem der Ansprüche 1 bis 9 ausführt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0045550 A

**Littérature non-brevet citée dans la description**

- **M. Gardner.** A new kind of cipher that would take millions of years to break. *Scientific American,* Août 1977
- **S. Goldwasser ; S. Micali ; C. Rackoff.** 17th ACM Symposium on the Theory of Computing. *The Knowledge Complexity of Interactive Proof Systems,* 1985, 291-304
- **U. Feige ; A. Fiat ; A. Shamir.** Zero-knowledge Proofs of Identity. *Journal of Cryptology,* 1988, vol. 1, 77-94